Europäisches Patentamt

European Patent Office

Office européen des brevets

(19)

(11) Veröffentlichungsnummer : **0 172 404**
**B1**

(12) **EUROPÄISCHE PATENTSCHRIFT**

(45) Veröffentlichungstag der Patentschrift :
08.07.87

(51) Int. Cl.⁴ : **B 61 H 15/00,** F 16 D 65/56

(21) Anmeldenummer : **85108847.6**

(22) Anmeldetag : **15.07.85**

(54) **Bremseinheit für Schienenfahrzeuge.**

(30) Priorität : 06.08.84 DE 3428972

(43) Veröffentlichungstag der Anmeldung :
26.02.86 Patentblatt 86/09

(45) Bekanntmachung des Hinweises auf die Patenterteilung : 08.07.87 Patentblatt 87/28

(84) Benannte Vertragsstaaten :
CH DE FR GB LI SE

(56) Entgegenhaltungen :
FR-A- 2 296 793
FR-A- 2 438 200
US-A- 3 131 788

(73) Patentinhaber : KNORR-BREMSE AG
Moosacher Strasse 80 Postfach 401060
D-8000 München 40 (DE)

(72) Erfinder : Staltmeir, Josef
Knorrstrasse 83
D-8000 München 40 (DE)
Erfinder : Wosegien, Bernd
Angerweg 8
D-8000 München 83 (DE)

EP 0 172 404 B1

## Beschreibung

Die Erfindung betrifft eine Bremseinheit für Schienenfahrzeuge, mit einem selbsttätigen Nachstellmechanismus, der eine von einem Bremskraftmotor, gegebenenfalls einem Bremszylinder, bewegbare, im wesentlichen axialbeweglich geführte Steuerhülse, wenigstens eine über eine Schaltkupplung mit der Steuerhülse kuppelbare Mutter und eine über ein nicht-selbsthemmendes Gewinde mit der Mutter verschraubte, undrehbar gehaltene Gewindespindel umfaßt, mit einem am Vorderende der Gewindespindel angelenkten, gegebenenfalls über eine Pendelhebelaufhängung geführten Bremsbelaghalter und mit einer handbetätigbaren Rückstellrichtung, die ein auf der dem Bremsbelaghalter abgewandten Seite im Bremseinheit-Gehäuse im wesentlichen gleichachsig zur Steuerhülse und von Hand drehbar gelagertes Antriebsteil aufweist, welches über eine Verbindungseinrichtung mit der nur bei Betätigung der Rückstelleinrichtung drehbaren, ansonsten undrehbar gehaltenen Steuerhülse verbunden ist, und wobei der Bremskraftmotor mit einer undrehbar gehaltenen Schubhülse gekoppelt ist, die gleichachsig zur Steuerhülse angeordnet ist.

Eine derartige Bremseinheit ist aus der DE-B-1 809 556 bekannt. Die Steuerhülse ist hierbei selbst bzw. vermittels der Verbindungseinrichtung axialverschieblich im Bremseinheit-Gehäuse geführt. Der als Bremsmotor dienende Bremszylinder ist mit einem Übersetzungshebel gekoppelt, welcher zur Aufnahme von Vertikalverschiebungen über ballige Druckflächen mit Anschlagflächen an der Steuerhülse gekoppelt ist. Das Vorderende der Gewindespindel ist über eine vertikalverschiebliche Keilnutführung mit dem an einem Pendelhebel aufgehängten Bremsbelaghalter verbunden, die Keilnutführung dient der Aufnahme von Vertikalverschiebungen zwischen dem Bremsklotzhalter und der Gewindespindel. Die axialen Gleitführungen für die Steuerhülse sowie die Anschlagflächen zwischen dem Übersetzungshebel und der Steuerhülse sowie die Keilnutführung zwischen Gewindespindel und Bremsbelaghalter stellen verschleißgefährdete Bauelemente dar, wobei zudem die axiale Gleitführung für die Steuerhülse klemmungsgefährdet ist. Zur Drehsicherung der Steuerhülse ist eine gegen Federkraft aushebbare Klinke vorgesehen, bei Betätigen der Rückstelleinrichtung muß daher gleichzeitig zum Drehen des Antriebsteiles die Klinke ausgehoben werden, was zu Bedienungsschwierigkeiten führen kann.

Aus der US-A-3 884 333 ist eine ähnliche Bremseinheit (gemäß dem ersten Teil des Anspruchs 1) bekannt, bei welcher jedoch das Vorderende der Gewindespindel gemeinsam mit dem Bremsbelaghalter vermittels eines Bolzens an einem Pendelhebel angelenkt ist. Die Steuerhülse ist von einer in Bremskraftrichtung über einen Anschlag mit ihr gekuppelten Schubhülse umgeben, welche über eine Drehlagerung am Übersetzungshebel angelenkt ist. Zwischen die Schubhülse und die Steuerhülse ist ein bei übermäßiger Drehmomentbelastung entgegen einer Federkraft aushebbares Sperrklinkengetriebe eingeordnet. Infolge der Anlenkung des Nachstellmechanismus sowohl am Pendelhebel wie auch am Übersetzungshebel führen während Einbrems- und Lösehüben die Steuerhülse und die Gewindespindel neben der wesentlichen Axialverschiebung auch gewisse Vertikalverschiebungen und Drehungen in einer Vertikalebene aus, das mit der Steuerhülse starr verbundene Antriebsteil muß daher mit großem, vertikalen Spiel eine nur aufwendig gegen das Eindringen von Fremdkörpern abzudichtende Öffnung im Bremseinheit-Gehäuse durchragen. Außerdem bedarf ein für die Funktion des Nachstellmechanismus wesentlicher Steueranschlag einer aufwendigen, sphärischen Führung an der Steuerhülse. Bei dieser bekannten Bremseinheit besteht zudem die Schwierigkeit, daß einerseits, im normalen Bremsbetrieb, die Steuerhülse vermittels des Klinkengesperres mit Sicherheit, trotz Drehmomentbelastung durch das von der Bremskraft durchsetzte, nicht-selbsthemmende Gewinde, drehfest gehalten werden muß, daß andererseits aber zum Rückstellen dieses Klinkengesperres beim Drehen des Antriebsteiles von Hand überwunden werden muß: Bei ausreichender Drehsicherung der Steuerhülse gegen ungewolltes Verstellen muß also beim gewollten Rückstellen ein hoher Kraftaufwand aufgebracht werden.

Zum Vermeiden dieses Mangels ist es aus der DE-A-30 10 228 bekannt, die Steuerhülse eines Nachstellmechanismus für eine Bremseinheit mit einer besonderen Vorrichtung zum Arretieren zu verbinden, welche bei Drehmomentbelastung der Steuerhülse eine in Schließrichtung einer Haltekupplung zum Gehäuse wirkende Kraftkomponente hervorruft. Die Schließkupplung ist dabei in Schließrichtung von einer von Hand leicht überwindbaren Feder belastet, beim Stellen von Hand ist daher nur die Kraft dieser Feder zu überwinden, es ist kein großer Kraftaufwand erforderlich. Die Vorrichtung fordert jedoch einen beachtlichen, zusätzlichen Bauaufwand und Bauraum, zudem ist sie nur bei rein axialverschieblich drehbar gehaltenen Steuerhülsen und Gewindespindeln aufweisenden Nachstellmechanismen geeignet, wodurch wiederum verschleißgefährdete Drucklagerungen zwischen dem Übersetzungshebel und der Steuerhülse bzw. der Gewindespindel und dem Bremsbelaghalter erforderlich sind.

Bei einer von den eingangs genannten Merkmalen abweichenden Bremseinheit ist es bekannt (DE-A-20 28 961), zwischen dem im Bremseinheit-Gehäuse drehbar gelagerten Antriebsteil und einer von diesem antreibbaren Mutter eine axialverzahnte Kupplung einzuordnen, welche in Schließrichtung federbelastet ist und deren Verzahnungs-Seitenflanken geneigt zur Axialrichtung verlaufen. Die Drehkupplung rastet bei ein bestimmtes Drehmoment überschreitender Drehmomentbelastung selbsttätig aus und dient durch diese Drehmomentbegrenzung einem Schutz der Teile des Nachstellmechanismus vor Beschädigung bei übermäßig kräftiger Betätigung des Antriebsteiles. Die Aufgabe einer gleichzeitigen Drehsicherung eines Bauteiles liegt bei dieser Drehkupplung nicht vor.

Es ist Aufgabe der Erfindung, eine Bremseinheit der eingangs genannten Art derart auszugestalten, daß bei nur im wesentlichen axialverschieblich geführter Steuerhülse, also dem Zulassen gewisser Vertikalversetzungen und Drehungen in einer Vertikalebene für die Steuerhülse, einerseits eine zuverlässige Drehsicherung für die Steuerhülse gegen ungewollte Drehungen während des üblichen Bremsbetriebes erreicht wird, andererseits jedoch ein Rückstellen vermittels des im Bremseinheit-Gehäuse gut abdichtbar drehbar gelagerten Antriebsteiles möglich ist, wobei zusätzlich die Möglichkeit geboten sein soll, durch entsprechende Ausgestaltung die zum Drehen des Antriebsteiles beim Rückstellen aufzubringende Kraft gering halten zu können. Zudem soll die Rückstelleinrichtung nur einen geringen Bau- und Raumaufwand erfordern und ohne Schwierigkeiten in Bremseinheiten integrierbar sein, welche mit selbsttätigen Nachstellmechanismen der eingangs genannten Art, jedoch im weiteren unterschiedlicher Bau- und Funktionsweise ausgestattet sind.

Diese Aufgabe wird nach der Erfindung dadurch gelöst, daß die Schubhülse über eine kombinierte, in Bremskraftrichtung schließende und in Schließrichtung von einer Feder belastete Dreh- und Schubkupplung mit der Steuerhülse kuppelbar ist, und daß zwischen das rückseitige Ende der Steuerhülse und das Antriebsteil eine Axialabweichungen und Axialverschiebungen zwischen der Steuerhülse und dem Antriebsteil aufnehmende Drehkupplung angeordnet ist.

Die nach der weiteren Erfindung vorteilhafte Ausgestaltung einer derartigen Bremseinheit ist in den Unteransprüchen angegeben.

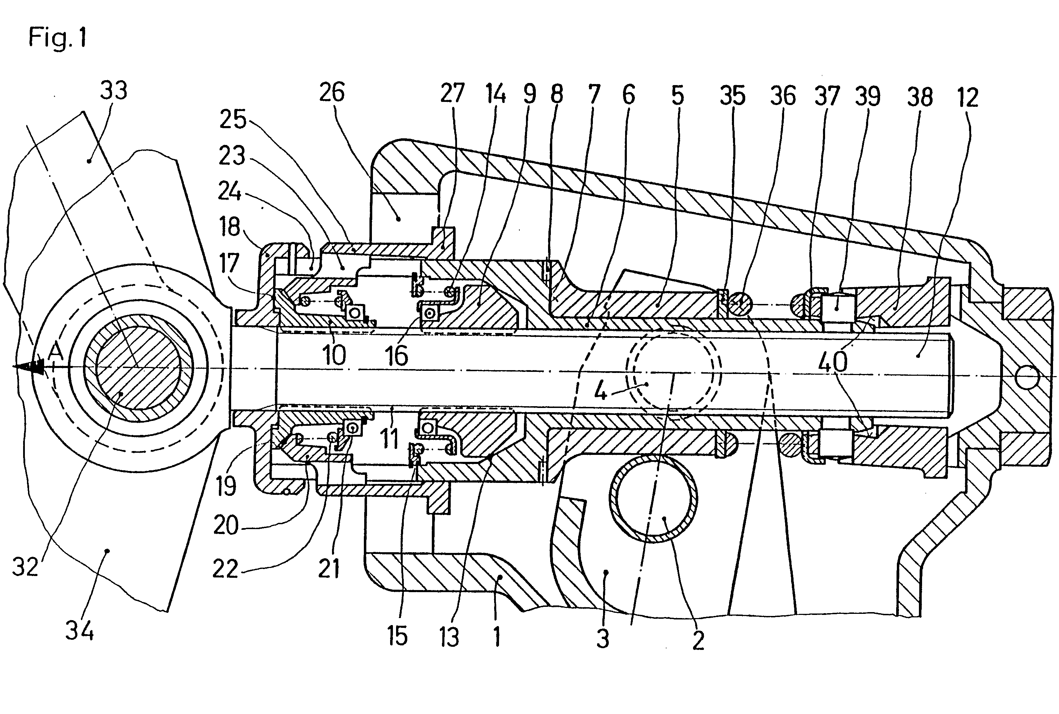

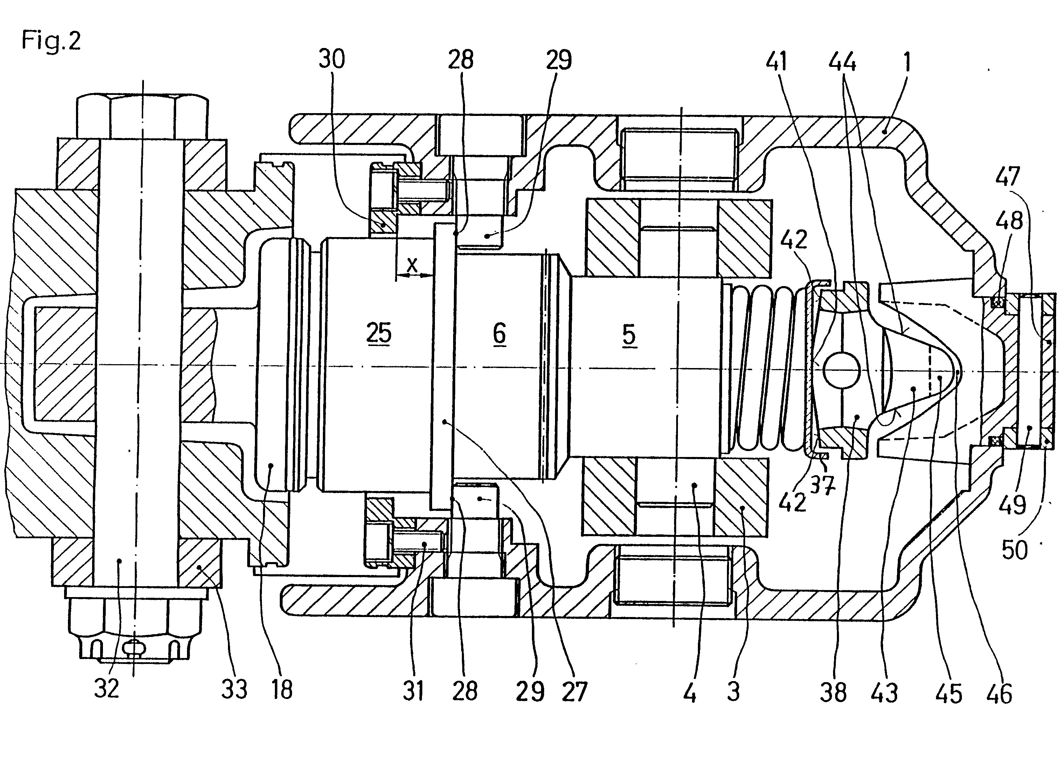

In der Zeichnung Fig. 1 und Fig. 2 ist ein Ausführungsbeispiel für eine nach der Erfindung ausgebildete Bremseinheit in ihren erfindungswesentlichen Teilen im Vertikal- und Horizontalschnitt dargestellt.

In einem nur teilweise dargestelltem Bremseinheit-Gehäuse 1 ist um einem horizontalen Bolzen 2 drehbar ein im wesentlichen vertikal verlaufender Übersetzungshebel 3 drehbar gelagert. Das in Fig. 1 nicht dargestellte, obere Ende des Übersetzungshebels 3 ist mit einem Bremskraftmotor, gegebenenfalls der Kolbenstange eines üblichen Bremszylinders verbunden, derart, daß der Übersetzungshebel 3 bei Betätigen des Bremskraftmotors um den Bolzen 2 entgegen dem Uhrzeigersinn gedreht wird. Das untere Ende des Übersetzungshebels 3 ist vermittels einer waagerechten Bolzenlagerung 4 an einer im wesentlichen horizontal verlaufenden Schubhülse 5 angelenkt. Die Schubhülse 5 ist axialverschieblich und drehbar auf eine Steuerhülse 6 gelagert, wobei zwischen das in Bremskraftrichtung gemäß Pfeil A liegende Vorderende der Schubhülse 5 und einer Radialschulter 7 der Steuerhülse 6 eine kombinierte Dreh- und Schubkupplung 8 eingeordnet ist, welche abgeschrägt axialverzahnt ausgebildet ist. Die Steuerhülse 6 gehört einem selbsttätigen Nachstellmechanismus zu, in ihrem erweiterten Vorderende befinden sich axial zueinander versetzt zwei Muttern 9 und 10, welche über ein nichtselbsthemmendes Gewinde 11 mit einer die Steuerhülse 6 durchsetzende Gewindespindel 12 verschraubt sind. Die rückwärtige Mutter 9 ist durch eine rückwärtige Kupplung 13 mit der Steuerhülse 6 kuppelbar ; eine Feder 14, deren Vorderende vermittels eines Federtellers 15 an der Steuerhülse 6 gefangen ist, belastet über ein Drehlager 16 die Mutter 9 in Schließrichtung der Kupplung 13. Die vordere Mutter 10 ist mittels eines Anschlages 17 gegen einen mit der Steuerhülse 6 verbundenen, von der Gewindespindel 12 verschieblich durchsetzten Deckel 18 abfangbar ; über eine rückwärtige Kupplung 19 ist die Mutter 10 mit einem Kupplungsring 20 kuppelbar, der axial verschieblich im Vorderende der Steuerhülse 6 gelagert ist. Zwischen dem Kupplungsring 20 und die Mutter 10 ist unter Zwischenordnen eines Drehlagers 21 eine Feder 22 eingespannt, welche die Mutter 10 und den Kupplungsring 20 in Schließrichtung der Kupplung 19 gegeneinander verspannt. Der Kupplungsring 20 steht über Radialstege 23, welche Axialschlitze 24 im Vorderende der Steuerhülse 6 durchgreifen, mit einer auf der Steuerhülse 6 axialverschieblich gelagerten Anschlaghülse 25 in starrer Verbindung. Die Anschlaghülse 25 durchgreift eine vordere Öffnung 26 im Bremseinheit-Gehäuse 1 mit großem Spiel in vertilkaler Richtung und wesentlich geringerem Spiel in horizontaler Richtung. Ein an der Anschlaghülse 25 angeordneter Radialflansch 27 liegt im dargestellten Lösezustand der Bremseinheit an einen rückwärtigen Gehäuseanschlag 28 an, der von zwei horizontal in das Bremseinheit-Gehäuse 1 eingeschraubten Schrauben 29 gebildet wird. Mit einem dem Sollhub X entsprechenden Abstand steht dem Radialflansch 27 nach vorne versetzt ein weiterer, in einer Horizontalebene angeordneter Anschlag 30 gegenüber, der über Schrauben 31 am Bremseinheit-Gehäuse 1 festgehalten ist.

Das Vorderende der Gewindespindel 12 ist mittels eines horizontalen Bolzens 32 schwenkbar sowohl mit einem im wesentlichen vertikal nach oben verlaufenden Pendelhebel 33 als auch mit einem nur teilweise dargestellten Bremsbelaghalter 34 verbunden. Das obere Ende des Pendelhebels 33 ist an einer festen, beispielsweise am Bremseinheit-Gehäuse 1 angeordneten, nicht dargestellten Lagerstelle angelenkt.

Insoweit entspricht der Aufbau und die Funktionsweise der Bremseinheit im wesentlichen bekannten Anordnungen, beispielsweise gemäß der bereits eingangs erwähnten US-A-3 884 333, so daß die folgende Funktionsbeschreibung kurz gehalten werden kann. Der Übersetzungshebel 3 hält die Schubhülse 5 und im Normalbetrieb über die Dreh- und Schubkupplung 8 auch die Steuerhülse 6 drehfest, während der Pendelhebel 33 die Gewindespindel 12 drehfest hält. Im Lösezustand der Bremseinheit nehmen deren vorstehend beschriebene Teile die aus den Figuren ersichtlichen Lagen ein. Zum Bremsen wird vermittels des Übersetzungshebels 3 die Schubhülse 5 und damit die Steuerhülse 6 in Bremskraftrichtung A verschoben, wobei über die Kupplung 13 und die Mutter 9 die Gewindespindel 12 mitgenommen wird. Die über die Radialstege 23 und die Kupplung 19 drehfest gehaltene Mutter 10 folgt diesen Bewegungen. Bei Bremsungen mit korrektem Spiel bewegt sich dabei der Radialflansch 27 innerhalb des Sollhubes X, ohne vom Anschlag 30 hierbei behindert zu werden. Bei übermäßig großem Bremshub dagegen schlägt bei Erreichen des Sollhubes X der Radialflansch 27 am Anschlag 30 an und wird von diesem zurückgehalten, wodurch auch die Mutter 10 zurückgehalten wird und sich unter zeitweiligem Öffnen der Kupplung 19 auf der Gewindespindel 12 nach rückwärts verschraubt. Beim nachfolgenden Bremsenlösen wird die durch die geschlossene Kupplung 19 wieder drehfest gehaltene Mutter 10 und damit auch der Radialflansch 27 mit der Gewindespindel 12 zurückbewegt, bis der Radialflansch 27 an den Zapfenschrauben 29 anschlägt und somit die Gewindespindel 12 in ihrer augenblicklichen Lage festgehalten wird. Beim weiteren Zurückgehen der Steuerhülse 6 öffnet sich die Kupplung 13 und die Feder 14 schraubt die Mutter 9 auf der Gewindespindel 12 zurück, bis der Anschlag 17, welcher beim Zurückschrauben der Mutter 10 geöffnet wurde, wieder zur Anlage gelangt. Damit ist eine neue Lösestellung der Bremseinheit mit zum Beseitigen des übermäßigen Spieles nach vorne verschraubter Gewindespindel 12 erreicht.

Am rückwärtigen Ende der Schubhülse 5 liegt über ein Axiallager 35 eine die Steuerhülse 6 umgebende Feder 36 an, deren anderes, rückwärtiges Ende sich über einen Federteller 37 gegen das Vorderende einer Kupplungshülse 38 abstützt. Die Kupplungshülse 38 ist nahe ihres Vorderendes mittels einer Querbolzenlagerung 39 am rückwärtigen Ende der Steuerhülse 6 angelenkt ; die Querbolzenlagerung 39 weist zwei gleichachsige, zur Achsrichtung der Steuerhülse 6 senkrechte Bolzen auf. Die ansonsten die Steuerhülse 6 mit Spiel umfassende und nach rückwärts überragende Kupplungshülse 38 weist im Bereich der Querbolzenlagerung 39 ballige, an der Außenfläche der Steuerhülse 6 anliegende Lagerfläche 40 auf. In Achsrichtung der Querbolzenlagerung 39 gesehen ist das Vorderende der Kupplungshülse 38 etwa dachartig gestaltet, wie aus Fig. 2 ersichtlich. Mit einem gerundeten Mittelabschnitt 41 liegt bei gleichachsiger Lage von Steuerhülse 6 und Kupplungshülse 38 letztere am Federteller 37 an, während sich die seitlich anschließenden Flächenteile 42 schräg zur Seite und unter einem geringen Winkel nach rückwärts geneigt verlaufend anschließen. Das rückwärtige Ende der Kupplungshülse 38 ist zu zwei Axialzähnen 43 ausgebildet, welche nach rückwärts vorspringend zueinander parallel verlaufen, wobei die Zahnmittellinien die Achse der Querbolzenlagerung 39 schneiden. Die Axialzähne weisen schräg verlaufende Seitenflanken 44 auf, derart, daß die sich nach rückwärts verjüngen, und enden mit einem abgerundeten Zahnkopf 45. Die Zahnköpfe 45 weisen senkrecht zur Achsrichtung der Kupplungshülse 38 eine größere Stärke als die übrige Wandung der Kupplungshülse auf. Die Axialzähne 43 greifen in entsprechend der Seitenflanken 44 abgeschrägte und an ihrem Grund gerundete Axialnuten 46 ein, mit welchen sie eine Axialverzahnung 43, 46 bilden. Die Axialnuten 46 befinden sich an einem Antriebsteil 47, welches im wesentlichen gleichachsig zur Gewindespindel 12 drehbar, aber axial unverschieblich im Bremseinheit-Gehäuse 1 gelagert ist. Ein Dichtring 48 dichtet die Lagerung gegen das Eindringen von Verschmutzungen ab. Das aus dem Bremseinheit-Gehäuse 1 ins Freie ragende Ende des Antriebsteiles 45 ist mittels eines auf ihm durch einen Stift 49 gehaltenen Formteiles 50 zu einem Sechskant gestaltet, an welchem ein Schraubenschlüssel oder dergleichen Werkzeug ansetzbar ist.

Die axiale Länge der Axialverzahnung 43, 46 ist um ein Sicherheitsmaß größer als der größte, im praktischen Betrieb mögliche Bremshub, sie ist also wesentlich größer als der Sollhub X.

Im normalen Bremsbetrieb drückt die sich an ihrem rückwärtigen Ende über den Federteller 37, die Kupplungshülse 38 und die Querbolzenlagerung 39 gegen die Steuerhülse 6 abstützende Feder 36 die Schubhülse 5 relativ zur Steuerhülse 6 nach vorne, derart, daß die Dreh- und Schubkupplung 8 fest ineinander eingreift und somit die Schubhülse die Steuerhülse 6 drehfest hält.

Die während Bremsungen in Pfeilrichtung A wirkende, vom Bremskraftmotor ausgeübte Bremsen-Zuspannkraft durchsetzt zudem die Dreh- und Schubkupplung 8 und belastet diese zusätzlich in Schließrichtung. Während Brems- und Lösevorgängen, bei welchen die Kupplungshülse 38 den Axialverschiebungen der Steuerhülse 6 erfolgt, verschieben sich die Axialzähne 43 und die Axialnuten 46 axial zueinander, ohne jedoch außer Eingriff zu gelangen ; der Spielspalt zwischen den Seitenflanken 44 bzw. dem Zahnkopf 45 zu den Wandungen der Axialnut 46 vergrößert bzw. verkleinert sich hierbei, im Lösezustand der Bremseinheit gelangt die Axialverzahnung 43, 46 wieder in die insbesondere aus Fig. 2 ersichtliche Lage. Während der Brems- und Lösevorgänge erfahren die Gewindespindel 12 und die zu dieser gleichachsigen Teile infolge der doppelten Spindelaufhängung zum einen am Übersetzungshebel 3 und zum anderen am Pendelhebel 33 gewisse Seitenverschiebungen und Drehungen in einer Vertikalebene ; diese Versetzbewegungen werden vom Spiel in der Axialverzahnung 43, 46 und auch durch evtl., geringe Drehungen der Kupplungshülse 38 um die Querbolzenlagerung 39 aufgenommen und verbleiben daher ohne Einfluß auf das Antriebsteil 47.

Soll die axiale Lage der Gewindespindel 12 innerhalb der Steuerhülse 6, also der Nachstellmechanismus von Hand verstellt werden, wie es insbesondere zum Rückstellen beim Wechsel verschlissener gegen neue Bremsbeläge erforderlich ist, so ist mittels eines an das Formteil 50 anzusetzenden Drehwerkzeuges das Antriebsteil 47 in der entsprechenden Drehrichtung zu drehen. Die Drehbewegung wird über die in gegenseitige Anlage gelangende Axialzahnung 43, 46 auf die Kupplungshülse 38 und von dieser über die Querbolzenlagerung 39 auf die Steuerhülse 6 übertragen. Durch die abgeschränkten Seitenflanken 44 der Axialzähne 43 in Verbindung mit den entsprechend geneigt verlaufenden, seitlichen Wandungen der Axialnuten 46 wird unter dem zu übertragenden Drehmoment eine Spreizkraftkomponente erzeugt, welche die Kupplungshülse 38 und das Antriebsteil 47 axial auseinander zu spreizen sucht ; da das Antriebsteil 47 axial gegen das Bremseinheit-Gehäuse 1 abgestütz ist, wird von dieser Spreizkraftkomponente nur eine axial in Bremskraftrichtung A auf die Steuerhülse 6 einwirkende Axialkraftkomponente wirksam. Unter dem anstehenden Drehmoment relativ zur undrehbar gehaltenen Schubhülse 5 und dem Einfluß der erwähnten Axialkraftkomponente löst sich die Dreh- und Schubkupplung 8 entgegen der Kraft der Feder 36 durch geringe, relative Axialverschiebung zwischen der Schub- und der Steuerhülse 5 bzw. 6, die Steuerhülse 6 dreht sich und nimmt über die geschlossenen Kupplungen 13 und 19 die beiden Muttern 9 und 10 sowie auch die Anschlaghülse 25 mit. Je nach Drehrichtung verschrauben sich dabei beide Muttern 9 und 10 gemeinsam auf der Gewindespindel 12 ; zum Rückstellen des Nachstellmechanismus sind diese Muttern 9 und 10 auf der Gewindespindel 12 in Bremskraftrichtung A zu verschrauben ; in Fig. 1 ist die Gewindespindel 12 in ihrem völlig eingeschraubten Zustand dargestellt.

Infolge Auftretens der beim manuellen Verstellen auf die Steuerhülse 6 einwirkenden, vorstehend erwähnten Axialkraftkomponente kann trotz kräftiger Auslegung der Feder 36 und/oder geringer Neigung der Verzahnungsflanken der Axialverzahnung der Dreh- und Schubkupplung 8 ein Ausrasten der Dreh- und Schubkupplung 8 mit geringem Kraftaufwand erzielt werden, so daß das manuelle Verstellen des Nachstellmechanismus nur geringen Kraftaufwand erfordert. Im Lösezustand bei manuell unbetätigtem Antriebsteil 47 hält dagegen die kräftige Feder 36 in Verbindung mit der steilflankigen Verzahnung der Dreh- und Schubkupplung 8 die Steuerhülse 6 sicher drehfest mit der Schubhülse 5 verbunden, so daß keine ungewollten Verstellungen auftreten können. Während der Bremsvorgänge, während welchem von der Schubhülse 5 Bremskräfte über die Steuerhülse 6 auf die Gewindespindel 12 übertragen werden, wird die Dreh- und Schubkupplung 8 wie bereits erwähnt zusätzlich von den zu übertragenden Bremskräften in Schließrichtung belastet und damit sicher geschlossen gehalten, so daß die durch die nicht-selbsthemmende Verschraubung der Muttern 9 und 10 unter dem Einfluß der Bremskräfte auf die Steuerhülse 6 bewirkten Drehmomente keine ungewollte Drehung der Steuerhülse 6 bewirken können. Das sichere Geschlossenhalten der Dreh- und Schubkupplung 8 bei manuell unbetätigtem Antriebsteil 47 ist damit im Lösezustand und auch während des Brems- und Lösebetriebes der Bremseinheit gewährleistet.

Der selbsttätige Nachstellmechanismus, umfassend den vorderen Abschnitt der Steuerhülse 6 mit den beiden Muttern 9 und 10, deren nichtselbsthemmende Verschraubung zur Gewindespindel 12 sowie die Anschlaghülse 25 mit ihrem Radialflansch 27 und den mit diesem zusammenwirkenden Anschlägen 28 und 30 zum Bremseinheit-Gehäuse 1, kann ohne Beeinträchtigung der vorstehend erwähnten, manuellen Verstellbarkeit und ohne Minderung der Sicherheit der Steuerhülse 6 gegen ungewolltes Verdrehen abweichend zu dem vorstehend beschriebenen Ausführungsbeispiel gemäß Fig. 1 und 2 ausgebildet werden, wesentlich ist lediglich, daß eine über ein nicht-selbsthemmendes Gewinde mit einer Gewindespindel verschraubte Mutter im Nachstellmechanismus enthalten ist, wobei diese Verschraubung manuell verstellbar ist. Die Mutteranordnung und deren Steuerung bzw. Kupplungsbetätigung kann also beliebig ausgebildet sein, auch kann der Nachstellmechanismus wie bekannt nur eine Mutter aufweisend ausgeführt sein. Weiterhin kann der Nachstellmechanismus, wie zum vorstehend beschriebenen Ausführungsbeispiel erwähnt, während des Lösehubes oder aber bereits während des Bremshubes sofortwirkend nachstellend ausgeführt sein. Wesentlich ist, daß die manuelle Verstelleinrichtung Axialversetzungen der Gewindespindel 12 auszugleichen vermag, daß beim manuellen Verstellen eine in Löserichtung der Dreh- und Schubkupplung 8 wirkende Axialkraftkomponente auftritt und daß die Dreh- und Schubkupplung 8 im Bremsbetrieb von den Bremskräften in Schließrichtung wirkend durchsetzt wird.

**Patentansprüche**

1. Bremseinheit für Schienenfahrzeuge, mit einem selbsttätigen Nachstellmechanismus, der eine von einem Bremskraftmotor, gegebenenfalls einem Bremszylinder, bewegbare, im wesentlichen axialbeweglich geführte Steuerhülse (6), wenigstens eine über eine Schaltkupplung (13) mit der Steuerhülse (6) kuppelbare Mutter (9) und eine über ein nicht-selbsthemmendes (11) Gewinde mit der Mutter (9) verschraubte, undrehbar gehaltene Gewindespindel (12) umfaßt, mit einem am Vorderende der Gewindespindel (12) angelenkten, gegebenenfalls über eine Pendelhebelaufhängung (33) geführten Bremsbelaghalter (34), mit einer handbetätigbaren Rückstelleinrichtung, die auf der dem Bremsbelaghalter (34) abgewandten Seite ein im Bremseinheit-Gehäuse (1) im wesentlichen gleichachsig zur Steuerhülse (6) und von Hand drehbar gelagertes Antriebsteil (47) aufweist, welches über eine Verbindungseinrichtung mit der nur bei Betätigung der Rückstelleinrichtung drehbaren, ansonsten undrehbar gehaltenen Steuerhülse (6) verbunden ist, und wobei der Bremskraftmotor mit einer undrehbar gehaltenen Schubhülse (5) gekoppelt ist, die gleichachsig zur Steuerhülse (6) angeordnet ist, dadurch gekennzeichnet, daß die Schubhülse über eine kombinierte, in Bremskraftrichtung schließende und in Schließrichtung von einer Feder (36) belastete Dreh- und Schubkupplung (8) mit der Steuerhülse (6) kuppelbar ist, und daß zwischen das rückseitige Ende der Steuerhülse (6) und das Antriebsteil (47) eine Axialabweichungen und Axialverschiebungen zwischen der Steuerhülse (6) und dem Antriebsteil (47) aufnehmende Drehkupplung (43, 46) eingeordnet ist.

2. Bremseinheit nach Anspruch 1, dadurch gekennzeichnet, daß am rückwärtigen Ende der Steuerhülse (6) mittels einer Querbolzenlagerung (39) eine Kupplungshülse (38) begrenzt seitlich auslenkbar gelenkt ist, welche mittels einer Axialverzahnung (43, 46) mit die Maximalgröße von Bremshüben übersteigender, axialer Eingriffslänge mit dem Antriebsteil (47) gekuppelt ist.

3. Bremseinheit nach Anspruch 2, dadurch gekennzeichnet, daß die Axialverzahnung (43, 46) zwei in Achsrichtung der Querbolzenlagerung (39) zueinander versetzt angeordnete, zueinander parallele Axialzähne (43) an einem der Teile Kupplungshülse (6) oder Antriebsteil (47) aufweist, deren jeder sich achsparallel zum jeweils anderen Teil — Antriebsteil (47) oder Kupplungshülse (6) — erstreckt und in eine an diesem anderen Teil befindliche Axialnut (46) eingreift.

4. Bremseinheit nach Anspruch 3, dadurch gekennzeichnet, daß die Axialzähne (43) sich zu ihrem Zahnkopf (45) und/oder die Axialnuten (46) sich zu ihrem Nutgrund hin verjüngen, derart, daß bei Drehmomentbelastung der Axialverzahnung (43, 46) zwischen der Kupplungshülse (38) und dem in Verschieberichtung nach rückwärts durch eine Axiallagerung gegen das Bremseinheit-Gehäuse (1) abgestützten Antriebsteil (47) eine axiale Spreizkraftkomponente auftritt.

5. Bremseinheit nach Anspruch 4, dadurch gekennzeichnet, daß die Zahnköpfe (45) und die Nutgründe gerundet ausgebildet sind.

6. Bremseinheit nach Anspruch 4 oder 5, dadurch gekennzeichnet, daß sich die Axialzähne (43) an der Kupplungshülse (38) und die Axialnuten (46) am Antriebsteil (47) befinden.

7. Bremseinheit nach einem oder mehreren der Ansprüche 2 bis 6, dadurch gekennzeichnet, daß die Kupplungshülse (38) das rückwärtige Ende der Steuerhülse (6) mit Spiel umgibt und nach rückwärts überragt.

8. Bremseinheit nach einem oder mehreren der vorstehenden Ansprüche 1 bis 7, dadurch gekennzeichnet, daß die Schubhülse (5) drehbar und axialverschieblich auf der Steuerhülse (6) gelagert ist und daß die die gegebenenfalls verzahnt ausgebildete, kombinierte Dreh- und Schubkupplung (8) in Schließrichtung belastende Feder (36) zwischen der Schubhülse (5) und der Kupplungshülse (38) eingespannt ist.

9. Bremseinheit nach den Ansprüchen 4, 7 und 8, dadurch gekennzeichnet, daß zwischen die Feder (36) und die Kupplungshülse (38) ein ringartiger Federteller (37) eingeordnet ist und daß das Vorderende der Kupplungshülse (38) in Achsrichtung der Querbolzenlagerung (39) gesehen dachflächenartig, mit gerundetem Mittelabschnitt (41) und seitlich nach rückwärts abfallenden seitlichen Flächenteilen (42), ausgebildet ist.

10. Bremseinheit nach Anspruch 8 oder 9, dadurch gekennzeichnet, daß die Feder (36) einerseits über ein Axiallager (35) abgestützt ist.

11. Bremseinheit nach Anspruch 10, dadurch gekennzeichnet, daß die Feder (36) über das Axiallager (35) am rückwärtigen Ende der Schubhülse (5) angreift und daß sich die kombinierte Dreh- und Schubkupplung (8) zwischen dem Vorderende der Schubhülse (5) und einer Radialschulter (7) der Steuerhülse (6) befindet.

**Claims**

1. Brake unit for rail vehicles, having an automatic adjusting mechanism comprising a control sleeve (6) which can be moved by a braking force motor, possibly a braking cylinder, and is guided so that it is movable substantially axially, at least one nut (9) which may be coupled by way of a clutch means (13) with the control sleeve (6), and a threaded spindle (12) which is screwed by way of a non-self-locking thread (11) with the nut (9) and is held so that is not rotatable, having a brake lining holder (34) which is articulated at the front end of the threaded spindle (12) and is guided, possibly by way of a pendulum lever suspension device (33), having a hand-actuated readjusting device, which on the side remote from the brake lining holder (34) has a drive part (47) which in the brake unit housing (1) is substantially coaxial to the control sleeve (6), is mounted so that it may be rotated by hand and is connected by way of a connecting arrangement with the control sleeve (6) which is only capable of rotating upon actuation of the re-adjusting device and is otherwise held so that it is not rotatable, and in which case the braking force motor is coupled with a sliding or thrust sleeve (5) which is held so that it is not rotatable and is arranged coaxial to the control sleeve (6), characterised in that the sliding sleeve may be coupled with the control sleeve (6) by way of a combined rotary and sliding coupling (8) which closes in the braking force direction and is loaded in the closing direction by a spring (36), and that arranged in between the rear end of the control sleeve (6) and the drive part (47) there is a rotary coupling (43, 46) which takes up axial deviations and axial displacements between the control sleeve (6) and the drive part (47).

2. Brake unit according to claim 1, characterised in that a coupling sleeve (38) is guided at the rear end of the control sleeve (6) by means of a cross-pin mounting (39) so that it may be deflected laterally in a limited manner, said coupling sleeve (38) being coupled with the drive part (47) by means of an axial tooth construction (43, 46) with axial line of action exceeding the maximum size of brake strokes.

3. Brake unit according to claim 2, characterised in that the axial tooth construction (43, 46) has two axial teeth (43) which are arranged so that they are offset in respect of each other in the axial direction of the cross-pin mounting (39) and are parallel to each other, the teeth (43) being arranged on either the coupling sleeve (6) or the drive part (47), each tooth (43) extends axially parallel to the other of these two parts and engage into an axial slot (46) located on this other part.

4. Brake unit according to claim 3, characterised in that the axial teeth (43) taper towards their tooth tips (45) and/or the axial slots (46) taper towards their slot base in such a way that in the event of torque loading of the axial tooth construction (43, 46) between the coupling sleeve (38) and the drive part (47), which is supported in the displacement direction rearward by means of an axial mounting against the brake unit housing (1), an axial expanding force component arises.

5. Brake unit according to claim 4, characterised in that the tooth tips (45) and the slot bases are designed so that they are rounded.

6. Brake unit according to claim 4 or 5, characterised in that the axial teeth (43) are located on the coupling sleeve (38) and the axial slots (46) are located on the drive part (47).

7. Brake unit according to one or more of the claims 2 to 6, characterised in that the coupling sleeve (38) surrounds the rear end of the control sleeve (6) with clearance and overlaps rearward.

8. Brake unit according to one or more of the preceding claims 1 to 7, characterised in that the sliding sleeve (5) is mounted so that it is rotatable and axially displaceable on the control sleeve (6) and the spring (36) which loads the combined rotary and sliding coupling (8), which is possibly designed so that it is toothed, in the closing direction is clamped between the sliding sleeve (5) and the coupling sleeve (38).

9. Brake unit according to claims 4, 7 and 8, characterised in that a ring-like spring plate (37) is arranged in between the spring (36) and the coupling sleeve (38) and that the front end of the coupling sleeve (38) is designed, viewed in the axial direction of the cross-pin mounting (39), so that it is like the surface of a roof, with rounded central section (41) and lateral surface portions (42) which fall away laterally rearward.

10. Brake unit according to claim 8 or 9, characterised in that the spring (36) is supported on the one side by way of an axial bearing (35).

11. Brake unit according to claim 10, characterised in that the spring (36) by way of the axial bearing (35) acts on the rear end of the sliding sleeve (5) and that the combined rotary and sliding coupling (8) is located between the front end of the sliding sleeve (5) and a radial shoulder (7) of the control sleeve (6).

**Revendications**

1. Dispositif de freinage pour des véhicules sur rails, avec un mécanisme automatique de rattrapage de jeu comprenant une douille de commande (6) guidée axialement et déplaçable par un moteur de force de freinage, éventuellement par un cylindre de frein, au moins un écrou (9) susceptible d'être accouplée à la douille de commande (6) par l'intermédiaire d'un embrayage (13), et une broche filetée (12) en prise avec l'écrou (9) et maintenue de façon à ne pas pouvoir tourner, avec un support de garniture de frein (34), articulé sur l'extrémité antérieure de la broche filetée (12) et éventuellement guidé par une suspension à levier pendulaire (33) et avec un dispositif de rappel à commande manuelle, comprenant, du côté éloigné du support de garniture de frein (34), un élément d'entraînement (47) monté dans le carter (1) du dispositif de freinage en position sensiblement coaxiale avec la douille de commande (6) et susceptible d'être manœuvré à la main, ledit élément d'entraînement étant relié par l'intermédiaire d'un dispositif de liaison à la douille de commande (6), qui ne peut tourner que lors de la manœuvre du dispositif de rappel, mais est empêché de tourner dans d'autres conditions, et ledit moteur de force de freinage étant accouplé à une douille de poussée (5) qui est coaxiale à la douille de commande (6), caractérisé par le fait que la douille de poussée est susceptible d'être accouplée à la douille de commande (6) par l'intermédiaire d'un accouplement à rotation et à poussée (8) qui se ferme dans le sens de la force de freinage et qui est chargé par un ressort (36) dans le sens de la fermeture, et qu'entre l'extrémité postérieure de la douille de commande (6) et l'élément d'entrainement (47) est monté un accouplement à rotation (43, 46) qui absorbe des décalages axiaux et des déplacements axiaux entre la douille de commande (6) et l'élément d'entraînement.

2. Dispositif de freinage selon la revendication 1, caractérisé par le fait qu'à l'extrémité postérieure de la douille de commande (6) est articulée pour une déviation latérale limitée et à l'aide d'un boulon transversal (39), une douille d'accouplement (38) qui, à l'aide d'une transmission axiale à denture (43, 46) est susceptible d'être accouplée à l'élément d'entraînement (47) suivant une longueur de prise axiale qui dépasse la grandeur maximale des courses de freinage.

3. Dispositif de freinage selon la revendication 2, caractérisé par le fait que la transmission axiale par denture (43, 46) comporte sur la douille d'accouplement (6) ou sur l'élément d'entraînement (47), deux dents axiales parallèles entre elles et décalées mutuellement dans le sens axial du montage à boulon transversal, chacune desdites dents s'étendant, parallèlement à l'axe vers l'autre élément — élément d'entraînement (47) ou douille d'accouplement (6) —, et pénétrant dans une gorge axiale (46) ménagée dans ledit autre élément.

4. Dispositif de freinage selon la revendication 3, caractérisé par le fait que les dents axiales (43) s'amincissent vers leur tête (45) et/ou les gorges axiales (46) s'amincissent vers leur fond de manière qu'à l'apparition de la charge d'un couple s'exerçant sur la transmission axiale par denture (43, 46), intervient entre la douille d'accouplement (38) et l'élément d'entraînement (47) qui est soutenu, vers l'arrière dans le sens du déplacement, par un montage axial contre le boîtier (1) du dispositif de freinage, une composante axiale de la force d'écartement.

5. Dispositif de freinage selon la revendication 4, caractérisé par le fait que les têtes (45) des dents et les fonds des gorges sont arrondis.

6. Dispositif de freinage selon la revendication 4 ou 5, caractérisé par le fait que les dents axiales (43) se trouvent sur la douille d'accouplement (38) et les gorges axiales (46) sur l'élément d'entraînement.

7. Dispositif de freinage selon une ou plusieurs des revendications 2 à 6, caractérisé par le fait que la douille d'accouplement (38) entoure avec jeu l'extrémité postérieure de la douille de commande (6) et déborde cette extrémité vers l'arrière.

8. Dispositif de freinage selon une ou plusieurs des revendications précédentes 1 à 7, caractérisé par le fait que la douille de poussée (5) est montée sur la douille de commande (6) de façon à pouvoir tourner et à être déplacée axialement sur celle-ci, et que l'accouplement combiné en rotation et en poussée (8), qui est éventuellement réalisé sous la forme d'une transmission à denture et qui est chargé par un ressort (36) dans le sens de la fermeture, est serré entre la douille de poussée (5) et la douille d'accouplement (38).

9. Dispositif de freinage selon les revendications 4, 7 et 8, caractérisé par le fait qu'entre le ressort (36) et la douille d'accouplement est agencé un plateau à ressort (37) de forme annulaire, et que l'extrémité antérieure de la douille d'accouplement (38), vue dans le sens axial du montage à boulon transversal (39), est réalisé sous la forme d'un toit à section médiane arrondie (41) et à éléments de surfaces latérales (42) tombant latéralement vers l'arrière.

10. Dispositif de freinage selon la revendication 8 ou 9, caractérisé par le fait que le ressort (36) est soutenu d'un côté par l'intermédiaire d'un palier axial (35).

11. Dispositif de freinage selon la revendication 10, caractérisé par le fait que le ressort (36) attaque, par l'intermédiaire du palier axial (35) l'extrémité postérieure de la douille de poussée (5), et que l'accouplement combiné en rotation et en poussée (8) se situe entre l'extrémité antérieure de la douille de poussée (5) et un épaulement radial (7) de la douille de commande (6).

Fig. 1

0 172 404

Fig.2